# EUROPÄISCHE PATENTSCHRIFT

(11) **EP 3 840 303 B1**
(45) Veröffentlichungstag und Bekanntmachung des Hinweises auf die Patenterteilung: **17.05.2023**
(21) Anmeldenummer: 19216865.6
(22) Anmeldetag: 17.12.2019
(51) Int. Cl.: H04L 12/46

(54) **DATENÜBERTRAGUNGSEINRICHTUNG, DATENEMPFANGSEINRICHTUNG UND SENDEVERFAHREN ZUM ÜBERTRAGEN VON DATENPAKETEN DURCH EINEN TUNNEL**
DATA TRANSMISSION DEVICE, DATA RECEIVING DEVICE AND TRANSMITTING METHOD FOR TRANSMITTING DATA PACKETS THROUGH A TUNNEL
DISPOSITIF DE TRANSMISSION DE DONNÉES, DISPOSITIF RÉCEPTEUR DE DONNÉES ET PROCÉDÉ DE TRANSMISSION DESTINÉ À LA TRANSMISSION DES PAQUETS DE DONNÉES À L'AIDE D'UN TUNNEL

(43) Veröffentlichungstag der Anmeldung: 23.06.2021
(73) Patentinhaber: Hotsplots GmbH, 10245 Berlin (DE)
(72) Erfinder: Fäcknitz, Martin, 12683 Berlin (DE)
(74) Vertreter: Gulde & Partner

(56) Entgegenhaltungen:
- US-A1- 2004 174 865
- US-A1- 2016 294 700
- US-A1- 2018 077 267

## Beschreibung

Die Erfindung betrifft eine Datenübertragungseinrichtung zum Übertragen von Datenpaketen durch einen mindestens einen Kommunikationskanal umfassenden Tunnel, eine Datenempfangseinrichtung zum Empfangen von Datenpaketen durch einen mindestens einen Kommunikationskanal umfassenden Tunnel und ein Sendeverfahren zum Übertragen von Datenpaketen von einer Datenübertragungseinrichtung durch einen mindestens einen Kommunikationskanal umfassenden Tunnel zu einer Datenempfangseinrichtung.

### Technologischer Hintergrund

Bei Tunnelnetzwerken wie beispielsweise VPN-Netzwerken werden eingekapselte Datenpakete über einen Tunnel von einem Endpunkt zu einem weiteren Endpunkt über eine oder mehrere internetbasierte Kommunikationskanäle versendet. Das gleichzeitige Ausnutzen von mehreren Kommunikationskanälen zum Datentransport, Bündelung der Kommunikationskanäle bzw. logische Zusammenfassung stellt hierbei eine besondere Herausforderung dar.

Kommunikationskanäle, die keine Daten mehr oder nur stark eingeschränkt übertragen können, sollen von einem VPN-Tunnel nicht berücksichtigt werden. Mit normalem zustandslosen Routing ist dies nicht möglich. Sobald mehrere Kommunikationskanäle zur Verfügung stehen, sollen diese jedoch effizient genutzt werden. Zumindest eine statische Gewichtung von Übertragungslinks wird im Stand der Technik mit Hilfe von Multi-Path-Routing bereitgestellt. Standardlösungen wie z. B. Open-VPN oder IPsec unterstützen mehrere Kanäle nicht. Stattdessen müssen mehrere unabhängige Instanzen über jeweils einen Kanal gestartet werden. Grundsätzlich lassen sich mehrkanalfähige VPN-Lösungen in zwei Klassen einteilen, einmal unechte Kanalbündelung und zweitens Load-Balancing.

Im Gegensatz zur echten Kanalbündelung (z. B. bei ISDN oder LTE mit Carrier Aggregation) findet bei der unechten Kanalbündelung keine Bündelung im physikalischen Sinne statt. Die Empfängerseite muss stets sicherstellen, dass die Pakete in korrekter Reihenfolge verarbeitet werden. Dabei muss die unterschiedliche Latenz der einzelnen Kanäle berücksichtigt werden. Die Latenz des Tunnels orientiert sich häufig an dem höchstlatenzierten Link innerhalb des Tunnels. Dies kann für bestimmte Anwendungen, z. B. VoIP, problematisch sein, sodass nicht immer alle Übertragungslinks eines Tunnels uneingeschränkt zur Verfügung stehen und deshalb auch keine Bündelung möglich ist. Ein weiteres Problem bei der unechten Kanalbündelung ist möglicher Paketverlust. Protokolle wie TCP verringern bei Paketverlust die Senderate, sodass die gebündelte Bandbreite dann kaum zu erreichen ist. Durch die erneute Übertragung von Paketen durch das VPN-Protokoll erhöht sich die Latenz, was wiederum für bestimmte Anwendungen kritisch ist.

Bei unechter Kanalbündelung werden oftmals auch Proxys für bestimmte Protokolle, z. B. TCP eingesetzt. Eine VPN-Software schaltet sich dabei aktiv zwischen die TCP-Verbindung, sodass aus Nutzersicht kein Paketverlust bis zur gebündelten Bandbreite mehr stattfindet. Allerdings ist dieses Verfahren kritisch zu betrachten, da dem jeweiligen TCP-Endpunkt Pakete bestätigt werden, die durch den anderen TCP-Endpunkt noch nicht empfangen wurden.

Beim Load-Balancing werden einzelne Verbindungen, z. B. TCP- oder UDP-Verbindungen, ausschließlich über einen Übertragungslink gesendet. Eine Verteilung von Paketen einer Verbindung auf unterschiedliche Übertragungslinks findet demnach nicht statt. Die Bandbreite einer Verbindung ist abhängig vom zugewiesenen Übertragungslink. Das kann bei stark unterschiedlichen Bandbreiten problematisch sein, insbesondere wenn zwei Verbindungen den gleichen Kontext haben, z. B. das Laden von Ressourcen einer Internetseite. Die Darstellung der Internetseite kann in diesem Fall durch den langsameren Link verzögert werden. Eine erneute Übertragung von verloren gegangenen Paketen findet nicht statt.

Unechte Kanalbündelung ist vorzugsweise für Szenarien geeignet, bei denen wenige Verbindungen die maximale gebündelte Bandbreite benötigen. Werden allerdings deutlich mehr Verbindungen als Übertragungslinks aufgebaut, so bringt die Bündelung hier keinen Vorteil mehr. Heutzutage werden selbst bei einem einfachen Zugriff auf eine Internetseite mehrere Verbindungen gleichzeitig aufgebaut. Load-Balancing ist für Szenarien mit vielen Verbindungen, sprich Nutzerverbindungen, z. B. bei der Nutzung von Hotspots durch viele gleichzeitige Nutzer, geeignet. Davon ausgehend, dass alle Verbindungen die zur Verfügung stehende Bandbreite komplett ausnutzen, bringt Bündelung hier keinen Vorteil mehr, sondern kann sich durch die erhöhte Latenz und erneutes übertragen von verlorenen Paketen nachteilig auswirken.

Der aktuelle Stand der Technik ist folgenden Limitierungen unterlegen. Eine Mehrkanalfähigkeit wird unter erschwerten Bedingungen erreicht. Die Gewichtung einzelner VPN-Verbindungen ist nur statisch möglich. Eingeschränkte Ausfallsicherheit unterschiedlicher Nutzer, die an einem Endpunkt A, z. B. an einem Hotspot, ins Internet geroutet werden sollen, sind auf Empfangsseite B nicht mehr individuell identifizierbar. Ferner erfolgt Bandbreitenlimitierung in der Regel empfangsseitig, sodass bereits übertragene Pakete verworfen werden müssen.

Die US 2018/077267 A1 offenbart ein Verfahren zum paket-basierten Verteilen von Datenpaketen einer Verbindung auf Übertragungslinks. In der US 2004/174865 A1 wird ebenfalls ein paketbasiertes Verfahren zum Zuweisen von Datenpaketen beschrieben, wobei die Datenpakete über Aggregate eines festen Übertragungslinks verteilt werden.

Der zu Grunde liegenden Erfindung liegt die Aufgabe zu Grunde, zumindest einen der oben genannten Mängel zu beheben oder einen dieser Mängel zumindest zu mindem. Insbesondere besteht eine Aufgabe darin, eine effiziente Nutzung der zur Verfügung stehenden Kommunikationskanäle beziehungsweise deren Übertragungslinks zu erreichen und dadurch den Datentransport durch den Tunnel zu verbessern. Weitere von der Erfindung gelöste Aufgaben ergeben sich aus der folgenden Offenbarung der Erfindung.

### Zusammenfassung der Erfindung

Ein Aspekt der Erfindung betrifft eine Datenübertragungseinrichtung zum Übertragen von Datenpaketen durch einen mindestens einen Kommunikationskanal umfassenden Tunnel zu einer Datenempfangseinrichtung gemäß Anspruch 1.

Ein Kommunikationskanal kann beispielsweise ein internetbasierter Uplink beziehungsweise Downlink sein zwischen dem Internet und der Datenübertragungseinrichtung bzw. der Datenempfangseinrichtung. Der Tunnel kann hier und im Folgenden einen oder auch mehrere Kommunikationskanäle umfassen. Mit anderen Worten ausgedrückt kann der Kommunikationskanal eine Netzwerkzugangsleitung bzw. Netzwerkableitung sein. Ein Kommunikationskanal ist beispielhaft eine DSL-Leitung, eine Kabelleitung, eine Glasfaserkabelleitung oder eine Mobilfunkleitung, wobei die Erfindung nicht darauf beschränkt ist. Eine Verbindung kann ferner beispielsweise eine TCP-Verbindung oder eine UDP-Verbindung sein. Eine solche Verbindung ist bevorzugt eindeutig definiert durch ein Quadrupel aus Quellport, Quell-IP-Adresse, Zielport und Ziel-IP-Adresse. Beispielsweise können verschiedene Nutzer eine Verbindung über die Datenübertragungseinrichtung aufbauen, um beispielsweise an ein bestimmtes Ziel im Internet zu gelangen. Unter einem Tunnel wird hier und im Folgenden eine Netzwerkschnittstelle und logische Zusammenfassung von Übertragungslinks verstanden, über welchen Datenpakete von der Datenübertragungseinrichtung zu einer Datenempfangseinrichtung gesendet werden können. Ein Übertragungslink entspricht einer Verbindung zwischen der Datenübertragungseinrichtung und der Datenempfangseinrichtung. Eine solche Verbindung kann beispielsweise eine Ende-zu-Ende-Verbindung sein. Ein Tunnel kann beispielsweise ein VPN-Tunnel sein. Eine Datenübertragungseinrichtung kann beispielsweise ein Router, ein VPN-Server, ein Gateway oder allgemein ein Verbindungsgerät sein, wobei die Erfindung nicht auf die vorigen Beispiele beschränkt ist. Einkapseln eines Datenpakets ist in anderen Worten ausgedrückt das Einbetten des Datenpakets in ein weiteres Datenpaket, wobei das ursprüngliche Datenpaket nicht modifiziert wird. Das Übertragungsprotokoll kann ein eigenständiges VPN-Protokoll sein, welches unabhängig ist vom Protokoll, welches den Datenströmen der Verbindungen zu Grunde liegt. Das VPN-Protokoll kann auf TCP oder UDP basieren, aber die Erfindung ist nicht darauf beschränkt.

Die Erfindung hat den Vorteil, dass der Datentransport durch den Tunnel flexibel ist und an Ereignisse anpassbar ist. Die Gewichtung gibt an, wie die einzelnen Verbindungen, beispielsweise Verbindungen von Hotspot-Nutzern, auf die Übertragungslinks verteilt werden. Beispielsweise kann eine Gewichtung durch eine Prozentzahl ausgedrückt werden, wie hoch der Anteil an Verbindungen oder Datenpaketen ist, welche über diesen Übertragungslink gesendet werden. Die Gewichtung der Übertragungslinks ist durch die Anpassung vielmehr zeitabhängig und kann somit an zeitliche Veränderungen bzw. Ereignisse angepasst werden. Eine feste Gewichtung wird durch die Erfindung überwunden. Die Information zum Übertragungslink kann dabei lokal zur Verfügung stehen. Bevorzugt ist diese Information über den Übertragungslink eine externe Information, welche der Datenübertragungseinrichtung aktuell und zeitnah bereitgestellt wird. Das Anpassen der Gewichtung führt dazu, dass der Tunnel hinsichtlich der zu übertragenden Datenmenge und dynamischen Ereignissen optimal ausgenutzt werden kann und Verspätungen in der Datenübertragung vermieden werden können. Dadurch wird somit die Verteilung der eingangsseitigen Verbindungen verbessert gegenüber statischen Lösungen.

Die Datenübertragungseinrichtung ist dazu eingerichtet, die Gewichtung der Übertragungslinks auf Basis von über den Tunnel von der Datenempfangseinrichtung gesendeten Feedback-Paketen anzupassen. Ein Feedback-Paket kann vorteilhaft externe Information des Übertragungslinks oder Kommunikationskanals beinhalten, auf welche die Datenübertragungseinrichtung keinen Zugriff hat, da dies nicht-lokale Information betrifft. Diese Information steht aber durch den Datenpakettransport der Datenempfangseinrichtung zur Verfügung. Wenn Feedback-Pakete Information über alle Übertragungslinks enthalten, so kann ein Verlust eines Feedback-Pakets besser kompensiert werden, da das nächste Feedback-Paket entsprechende Information wieder zur Verfügung stellt.

In bevorzugter Ausführungsform umfassen die Feedback-Pakete Information über die Qualität des Kommunikationskanals und/oder die Qualität eines, mehrerer oder aller verfügbarer Übertragungslinks. Qualität kann ferner beinhalten Bandbreite des Kommunikationskanals, bisher bereits verbrauchtes Datenvolumen und/oder Datenvolumen pro Zeit je Übertragungslink und/oder der Anzahl der pro Übertragungslink zugeordneten Verbindungen. Letztere kann auch lokal zur Verfügung stehen. Eine Gewichtung kann beispielsweise umgekehrt proportional zum verbrauchten Datenvolumen sein. Das Kriterium der Anzahl der Verbindungen pro Übertragungslink führt dazu, dass die Verbindungen geeignet verteilt werden.

Bevorzugt ist die Datenübertragungseinrichtung dazu eingerichtet, die Zuordnung der Verbindung von einem ersten Übertragungslink auf einen zweiten Übertragungslink zu ändern, wenn die Gewichtung der Übertragungslinks sich derart ändert, dass der zweite Übertragungslink eine durch die Änderung höhere Gewichtung als der erste Übertragungslink aufweist. Die Gewichtungsänderung kann demnach so deutlich ausfallen, dass ein zweiter Übertragungslink eine höhere Gewichtung erhält und somit in erster Linie aufgebaute Verbindungen diesem zugeordnet werden zum Transport der Datenpakete. Beispielsweise kann ein Übertragungslink nicht mehr verwendbar sein, bzw. ausfallen, und dann keine Gewichtung erhalten. Durch die Zuordnungsänderung wird insbesondere die Übertragungsgeschwindigkeit von Datenpaketen durch den Tunnel erhöht und eine unterbrechungsfreie Verbindung durch den Tunnel gewährleistet.

In bevorzugter Ausführungsform ist die Datenübertragungseinrichtung dazu eingerichtet, die Änderung des Übertragungslinks nach einer Schwellenzeit zu vollziehen, wobei die Schwellenzeit mindestens der größten Umlaufzeit des ersten oder zweiten Übertragungslink entspricht. Eine Schwellenzeit ist dabei so ausgelegt, dass die aufeinanderfolgenden Datenpakete bei einer Zuordnungsänderung auch in der richtigen Reihenfolge bei der Datenempfangseinrichtung ankommen. Als Beispiel kann die größte Umlaufzeit des ersten oder zweiten Übertragungslinks zu Grunde gelegt werden. Datenpaket-Umordnungen können somit verhindert werden. Dies berücksichtigt, dass Übertragungslinks unterschiedliche Latenzen haben können.

Bevorzugt erfolgt die Gewichtung auf Basis der Größen Bandbreite des Kommunikationskanals, Übertragungslinkqualität, bisher bereits verbrauchtes Datenvolumen und/oder Datenvolumen pro Zeit je Übertragungslink und/oder der Anzahl der pro Übertragungslink zugeordneter Verbindungen. Diese Größen ermöglichen eine optimale Ausnutzung des Tunnels und somit eine optimale Verteilung der Verbindungen über den Tunnel. Eine Gewichtung kann beispielsweise umgekehrt proportional zum verbrauchten Datenvolumen sein. Das Kriterium der Anzahl der Verbindungen pro Übertragungslink führt dazu, dass die Verbindungen geeignet über die verfügbaren Übertragungslinks verteilt werden.

In bevorzugter Ausführungsform ist die Datenübertragungseinrichtung dazu eingerichtet, jedem Übertragungslink eine Priorität zuzuweisen, wobei Übertragungslinks gleicher Priorität eine Prioritätsklasse bilden, und wobei die Datenübertragungseinrichtung dazu eingerichtet ist, eine Verbindung einem Übertragungslink gemäß der Priorität des Übertragungslinks zuzuweisen, und wobei die Zuweisung bei mehreren Übertragungslinks einer Prioritätsklasse gemäß deren Gewichtung erfolgt. Die Priorität bzw. die Prioritätsklassen können beispielsweise auf einer Art des Kommunikationskanals und/oder auf einer Bandbreite des Übertragungslinks oder Latenz basieren, wobei die Erfindung nicht darauf beschränkt ist. Sobald alle Übertragungslinks einer Prioritätsklasse ausgefallen sind, werden dann die Übertragungslinks einer nächst niedrigeren Prioritätsklasse verwendet. Sobald mindestens ein funktionierender Übertragungslink einer höheren Prioritätsklasse verwendbar ist, so kann dieser Übertragungslink wieder zur Übertragung genutzt werden. Ferner lassen sich dadurch sogenannte Fallback-Übertragungslinks realisieren, welche nur im Bedarfsfall verwendet werden. Ferner kann eine Bandbreitenlimitierung in Kombination mit der Prioritätsklasse erfolgen. Beispielsweise kann die Datenübertragungseinrichtung dazu eingerichtet sein, in Antwort auf das Verwenden eines Fallback-Links, die Bandbreite aller Verbindungen oder des Tunnels zu steuern beziehungsweise zu limitieren. Gemäß dieser Ausführungsform wird demnach einem Übertragungslink sowohl eine Gewichtung als auch eine Priorität zugewiesen.

Bevorzugt ist die Datenübertragungseinrichtung dazu eingerichtet ist, in jedem Header der zu übertragenden Datenpakete eine ID des zugeordneten Übertragungslink einzuschreiben, und/oder wobei die Datenübertragungseinrichtung dazu eingerichtet ist, die Bandbreite einer Verbindung und/oder eines Übertragungslinks und/oder des Tunnels zu steuern. Die Steuerung bzw. oftmals die Limitierung kann auch gemäß Klassen erfolgen. Jede Verbindung bzw. Nutzerverbindung, jeder Übertragungslink und sogar jeder Tunnel kann einer Klasse zugeordnet werden, für welche eine maximale Bandbreite festgelegt wird. Durch das Einschreiben einer eindeutigen ID kann ferner ein eindeutiger Übertragungslink identifiziert werden, auch wenn sich die IP-Adresse des Übertragungslinks ändert, zum Beispiel durch Zuweisungsänderung. Der Übertragungslink kann somit auch bei Verbindungsabbruch weiterhin bestehen. Dadurch werden Verbindungen eines Nutzers nicht beeinträchtigt. Übertragungslinks können nach einem Wiederaufbau des Kommunikationskanals bzw. Übertragungslinks wiederverwendet werden.

In einem weiteren nicht unter die Ansprüche fallenden Aspekt ist eine Datenempfangseinrichtung zum Empfangen von durch einen mindestens einen Kommunikationskanal umfassenden Tunnel gesendeten Datenpaketen bereitgestellt. Die Datenempfangseinrichtung ist ferner dazu eingerichtet, die über einen Übertragungslink eines Kommunikationskanals mittels eines paketbasierten Übertragungsprotokolls an die Datenempfangseinrichtung gesendeten Datenpakete zu empfangen und zu entkapseln, wobei der Kommunikationskanal zumindest einen Übertragungslink umfasst. Die Datenempfangseinrichtung ist ferner dazu eingerichtet, empfangene Datenpakete zu einem Datenstrom zusammenzuführen. Ferner ist die Datenempfangseinrichtung dazu eingerichtet, Information über einen Übertragungslink und/oder eines zugehörigen Kommunikationskanals an eine dazugehörige Datenübertragungseinrichtung zu senden. Eine Datenempfangseinrichtung kann ein VPN-Client, ein Router oder auch allgemein ausgedrückt eine Gegenstelle zur Datenübertragungseinrichtung sein.

In einem weiteren Aspekt der Erfindung wird ein VPN-Netzwerk gemäß Anspruch 8 bereitgestellt.

In bevorzugter Ausführungsform sind die erste und die zweite Datenübertragungseinrichtung derart eingerichtet, dass die Bandbreite eines ersten Tunnels zwischen der ersten Datenübertragungseinrichtung und der Datenempfangseinrichtung gegenüber der Bandbreite eines zweiten Tunnels zwischen der zweiten Datenübertragungseinrichtung und der Datenempfangseinrichtung steuerbar ist. Auch hier kann jedem Tunnel eine gewisse Bandbreite zugewiesen werden und auch hier können Klassen für bestimmte Tunnel verwendet werden. Die Anzahl der Tunnel ist dabei nicht auf eine bestimmte Anzahl limitiert.

Bevorzugt ist die Datenübertragungseinrichtung dazu eingerichtet, Datenpakete über einen ersten Übertragungslink an die Datenempfangseinrichtung zu senden, die Datenempfangseinrichtung dazu eingerichtet, Datenpakete über einen zweiten Übertragungslink an die Datenübertragungseinrichtung zu senden, wobei der erste und der zweite Übertragungslink sich voneinander unterscheiden. Dadurch können asynchrone Datenübertragungslinks ausgebildet bzw. abgebildet werden. Jede der beiden Einrichtungen kann somit eigenständig entscheiden, welche Übertragungslinks verwendet werden sollen und kann über verschiedene Übertragungslinks Datenpakete erhalten. Beispielsweise kann ein Übertragungslink mit hoher Sendebandbreite und geringer Empfangsbandbreite nur zum Senden verwendet werden. Das Empfangen kann dann über einen anderen Übertragungslink erfolgen.

In bevorzugter Ausführungsform umfasst das VPN-Netzwerk mindestens zwei Datenübertragungseinrichtungen, wobei die Datenempfangseinrichtung dazu eingerichtet ist, die Quelladressen der eingekapselten Datenpakete von den zwei Datenübertragungseinrichtungen auf eine jeweils eindeutige Quelladresse zu setzen, wobei jede der Verbindungen der Datenübertragungseinrichtung auf der Datenempfangseinrichtung eindeutig über die zugewiesene Quelladresse identifizierbar ist. Durch die zwei Datenübertragungseinrichtungen werden zwei Tunnel zur Empfangseinrichtung aufgebaut. Somit kann es Datenpakete mit gleicher lokaler Quelladresse geben. Durch das Setzen auf eine eindeutige Quelladresse können die Datenpakete dem jeweiligen Tunnel zugeordnet werden, so dass auch Antwortpakete auf Anfragen der Quellen, also der Verbindungen, richtig zugeordnet werden können.

In einem weiteren Aspekt der Erfindung wird ein Sendeverfahren zum Übertragen von Datenpaketen von einer Datenübertragungseinrichtung durch einen mindestens einen Kommunikationskanal umfassenden Tunnel zu einer Datenempfangseinrichtung gemäß Anspruch 12 bereitgestellt.

In einem weiteren nicht unter die Patentansprüche fallenden Aspekt wird ein Empfangsverfahren zum Empfangen von Datenpaketen durch einen mindestens einen Kommunikationskanal umfassenden Tunnel von einer Datenempfangseinrichtung zur Verfügung gestellt. Das Empfangsverfahren umfasst das Empfangen und Entkapseln von über einen Übertragungslink eines Kommunikationskanals mittels eines paketbasierten Übertragungsprotokolls an die Datenempfangseinrichtung gesendeten Datenpaketen, wobei der Kommunikationskanal zumindest einen Übertragungslink umfasst. Ferner umfasst das Empfangsverfahren das zusammenführen von empfangenen Datenpaketen jeder Verbindung zu einem Datenstrom. Ferner umfasst das Empfangsverfahren das Senden von Information über einen Übertragungslink und/oder eines zugehörigen Kommunikationskanals.

In einem weiteren Aspekt der Erfindung wird ein Computerprogrammprodukt zur Verfügung gestellt, umfassend Befehle, die bei der Ausführung des Programms durch einen Computer diesen veranlassen, die Schritte nach dem obigen Sendeverfahren auszuführen.

### Kurzbeschreibung der Figuren

Die Erfindung wird nachfolgend anhand eines Ausführungsbeispiels und dazugehöriger Zeichnungen näher erläutert. Die Figuren zeigen:
Fig. 1 ein VPN-Netzwerk nach einer beispielhaften Ausführungsform der Erfindung zu einem ersten Zeitschritt;
Fig. 2 ein VPN-Netzwerk nach einer beispielhaften Ausführungsform der Erfindung zu einem zweiten Zeitschritt;
Fig. 3 ein eingekapseltes Datenpaket; und
Fig. 4 ein VPN-Netzwerk nach einer weiteren beispielhaften Ausführungsform der Erfindung.

### Detaillierte Beschreibung der Erfindung

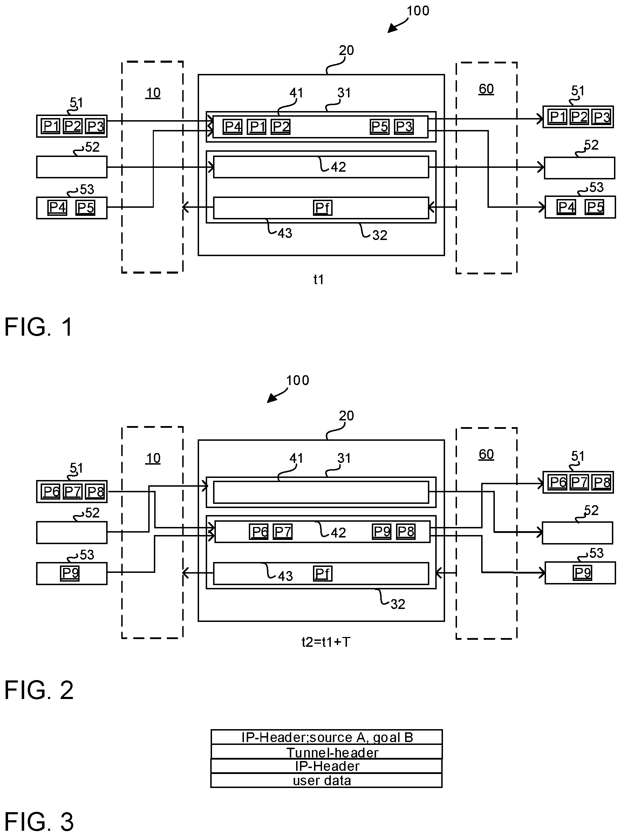

Fig. 1 und Fig. 2 zeigen schematisch ein VPN-Netzwerk 100 zu jeweils zwei unterschiedlichen Zeitschritten t1 und t2, wobei t2=t1+T und T eine positive Zeitverschiebung darstellt. Das VPN-Netzwerk 100 umfasst hierbei eine Datenübertragungseinrichtung 10 zum Übertragen von Datenpaketen P1, P2, P3, P4, P5 durch einen mehrere Kommunikationskanäle 31, 32 umfassenden Tunnel 20 zu einer Datenempfangseinrichtung 60.

Im Folgenden wird zunächst im Wesentlichen die Datenübertragungseinrichtung 10 beschrieben. Die Datenübertragungseinrichtung 10 ist dazu eingerichtet, über mindestens eine Verbindung 51, 52, 53 einen Datenstrom in Form von Datenpaketen P1, P2, P3, P4, P5 zu empfangen. In diesem Beispiel wird ein Datenstrom aus drei Datenpaketen P1, P2, P3 gebildet und ein weiterer Datenstrom aus den Paketen P4, P5. Dazu sind jeweils beispielhaft drei Verbindungen 51, 52, 53 vorgesehen, wobei die Erfindung nicht darauf beschränkt ist. Jede Verbindung 51, 52, 53 kann dabei eine äußere Verbindung sein, welche über die Datenübertragungseinrichtung 10 aufgebaut wird, oder mit anderen Worten ausgedrückt, über die Datenübertragungseinrichtung 10 weitergeleitet wird. Alternativ, und hier nicht ausdrücklich gezeigt, kann dies auch eine intern aufgebaute Verbindung 51, 52, 53 in der Datenübertragungseinrichtung 10 sein. Eine externe Verbindung 51, 52, 53 kann beispielsweise eine Nutzerverbindung sein, die Nutzer, hier beispielhaft drei Nutzer, zum Beispiel an einem Hotspot, über eine Datenübertragungseinrichtung 10 aufbauen. Demnach wären in dieser Ausführungsform drei Nutzerverbindungen vorgesehen. Eine solche Verbindung 51, 52, 53 kann beispielsweise eine TCP-Verbindung oder eine UDP-Verbindung sein, wobei die Erfindung nicht darauf beschränkt ist. Bevorzugt ist eine solche Verbindung eindeutig identifizierbar durch Quellport, Quell-IP-Adresse, Zielport Ziel-IP-Adresse.

Die Datenübertragungseinrichtung 10 ist dazu eingerichtet die empfangenen Datenpakete P1, P2, P3, P4, P5 in Übertragungspakete einzukapseln. Dies ist beispielsweise in Fig. 3 gezeigt. Dabei wird das zu sendende Paket in ein weiteres Paket eingebettet bzw. eingekapselt. Beispielsweise ist ein ursprüngliches Paket durch einen IP-Header und einen Nutzdateninhalt beschreiben, siehe Fig. 3. In Folge wird ein neuer Tunnel-Header hinzugefügt. Das Übertragungsprotokoll, zum Beispiel ein VPN-Protokoll oder allgemein ein Tunnelprotokoll, kann hierbei insbesondere von dem eingangsseitigen Transportprotokoll der Verbindungen 51, 52, 53 abweichen, wobei zum Beispiel ein TCP/IP- oder ein UDP-Protokoll verwendet werden kann. Zur besseren Übersicht sind in Fig. 1 und Fig. 2 die eingekapselten Datenpakete P1, P2, P3, P4, P5 und die empfangenen Datenpakete P1, P2, P3, P4, P5 gleich bezeichnet.

Mittels eines paketbasierten Übertragungsprotokolls werden über den Tunnel 20 die eingekapselten Datenpakete P1, P2, P3, P4, P5 an eine Datenempfangseinrichtung 60 übermittelt bzw. gesendet. Grundsätzlich ist die Erfindung dabei nicht auf ein spezielles Übertragungsprotokoll beschränkt. Der Tunnel 20 umfasst dabei mehrere Übertragungslinks 41, 42, 43, hier beispielsweise drei, wobei die Erfindung nicht darauf beschränkt ist. Die Übertragungslinks 41, 42, 43 stellen dabei Verbindungen dar zwischen der Datenübertragungseinrichtung 10 und der Datenempfangseinrichtung 60. Jeder Übertragungslink 41, 42, 43 ist dabei einem Kommunikationskanal 31, 32 zugeordnet. Ein Kommunikationskanal 31, 32 kann dabei beispielsweise eine DSL-Leitung sein, eine Kabelleitung wie insbesondere ein Glasfaserkabel oder aber auch eine mobilfunkbasierte Anbindung, wobei die Erfindung nicht auf diese Beispiele beschränkt ist. Insbesondere kann ein Kommunikationskanal 31, 32 ein internetbasierter Up- oder Downlink sein. Insbesondere können diese Kommunikationskanäle eine unterschiedliche Art und somit auch eine unterschiedliche Qualität zum Beispiel hinsichtlich ihrer Bandbreite oder Latenz aufweisen. In dem vorliegenden Beispiel sind zwei verschiedene Kommunikationskanäle 31, 32 bereitgestellt. Dieser beispielhafte Tunnel 20 ist somit mehrkanalfähig.

Jeder Kommunikationskanal 31, 32 umfasst dabei zumindest einen Übertragungslink 41, 42, 43, also eine Verbindung zwischen der Datenübertragungseinrichtung 10 und der Datenempfangseinrichtung 60 zur Übertragung der eingekapselten Datenpakete P1, P2, P3, P4, P5. In dem vorliegenden Beispiel umfasst ein erster Kommunikationskanal 31 einen ersten Übertragungslink 41 und ein zweiter Kommunikationskanal 32 einen zweiten und einen dritten Übertragungslink 42, 43.

Die Datenübertragungseinrichtung 10 ist dabei eingerichtet, die mindestens eine Verbindung 51, 52, 53 einem Übertragungslink 41, 42, 43 gemäß einer jedem Übertragungslink 41, 42, 43 zugewiesenen Gewichtung zuzuordnen. Grundsätzlich kann diese Zuordnung einer Verbindung 51, 52, 53 beibehalten werden, bis alle Datenpakete der Verbindung über den Übertragungslink 41, 42, 43 übertragen sind, sofern die Gewichtung über den Sendezeitraum sich nicht ändert. Somit können die Datenpakete P1, P2, P3, P4, P5 der entsprechenden Verbindung 51, 52, 53 eingekapselt über den zugeordneten Übertragungslink 41, 42, 43 an die Datenempfangseinrichtung 60 übertragen werden. In dem vorliegenden Beispiel wird die erste Verbindung 51 dem ersten Übertragungslink 41 des ersten Kommunikationskanals 31 zugeordnet und die dritte Verbindung 53 ebenfalls dem ersten Übertragungslink 41 des ersten Kommunikationskanals 31 zugeordnet. Offenbar ist der erste Übertragungslink 41 derjenige mit der höchsten Gewichtung. Dadurch werden die Verbindungen 51, 53 zunächst auf diesen Übertragungslink 41 gelegt. In diesem Beispiel werden also die Pakete P4, P5 der dritten Verbindung 53 und die Datenpakete P1, P2, P3 der ersten Verbindung 51 über den ersten Übertragungslink 41 gesendet. Die Gewichtung kann beispielsweise durch eine Prozentzahl ausgedrückt werden, wie hoch der Anteil an Verbindungen oder Datenpaketen ist, welche über diesen Übertragungslink gesendet werden

Die Datenübertragungseinrichtung 10 ist ferner dazu eingerichtet, Information über den Übertragungslink 41, 42, 43 zu erhalten. Diese Information kann beispielsweise lokal zur Verfügung stehen, zum Beispiel mit dem Inhalt, wie viele Verbindungen bereits einem Übertragungslink 41, 42, 43 zugeordnet sind. Auch können Informationen über den zugehörigen Kommunikationskanal 31, 32 als solchen erhalten werden. Auf Basis dieser erhaltenen Information kann nun die Datenübertragungseinrichtung 10 die Gewichtung des Übertragungslinks 41, 42, 43 anpassen. Somit kann der Datentransport durch den Tunnel dynamisch an Ereignisse angepasst werden. Die Gewichtung der Übertragungslinks 41, 42, 43 ist durch die Anpassung vielmehr zeitabhängig und reflektiert somit aktuelle dynamische Ereignisse. Die Information zum Übertragungslink kann dabei lokal zur Verfügung stehen. Bevorzugt kann die Information auf externer Information bzw. Informationen über die Übertragungslinks basieren, welche der Datenübertragungseinrichtung übermittelt werden. Das Anpassen der Gewichtung führt dazu, dass der Tunnel hinsichtlich der zu übertragenden Datenmenge und dynamischen Ereignissen optimal ausgenutzt wird. Dadurch wird die Verteilung der Verbindungen verbessert gegenüber unflexiblen Lösungen.

In dem vorliegenden Beispiel ist eine dynamische Anpassung zwischen dem Zeitschritt t1 und dem Zeitschritt t2 und in Fig. 2 im Vergleich zu Fig. 1 dargestellt. In diesem folgenden Zeitschritt hat die Datenübertragungseinrichtung 10 somit bereits die Gewichtung der Übertragungslinks 41, 42, 43 geändert. Dabei ist nun die erste Verbindung 51 dem zweiten Übertragungslink 42 des zweiten Kommunikationskanals 32 zugeordnet und die dritte Verbindung 53 ebenfalls dem zweiten Übertragungslink 42 zugeordnet. Offenbar ist nun der zweite Übertragungslink 42 derjenige mit der höchsten Gewichtung. Dadurch werden die Verbindungen zunächst nun auf diesen Übertragungslink 42 gelegt. In diesem Beispiel werden also ein neues Datenpaket P9 der dritten Verbindung 53 und die Datenpakete P6, P7, P8 der ersten Verbindung 51 über den zweiten Übertragungslink 42 gesendet. Die erhaltene Information hat somit dazu geführt, dass die Datenübertragungseinrichtung 10 die Gewichtung der Übertragungslinks 41, 42, 43 ändert.

Die Datenübertragungseinrichtung 10 passt die Gewichtung der Übertragungslinks 41, 42, 43 auf Basis von über den Tunnel 20 von der Datenempfangseinrichtung 60 gesendeten Feedback-Paketen an. In Fig. 1 ist ein solches Feedback-Paket Pf gezeigt, welches die Information über einen, mehrere oder alle Übertragungslinks 41, 42, 43 enthält. Bevorzugt wird über jeden Übertragungslink 41, 42, 43 ein Feedback-Paket gesendet. Es können daher auch mehrere Feedback-Pakete Pf simultan versandt werden. Damit wird sichergestellt, dass selbst bei einem Verlust des Feedback-Paketes eines Links das Feedback-Paket über einen anderen Link empfangen werden kann. Das Zurücksenden der Feedback-Pakete Pf kann dabei in bestimmten festgelegten Zeitabständen, beispielsweise regelmäßigen, also festen Zeitabständen, erfolgen oder bei Ereignissen, welche eine sofortige Rückmeldung erfordern. Durch die Feedback-Pakete Pf kann die Datenübertragungseinrichtung 10 kurzzeitig und schnell auf Veränderungen reagieren, um eine schnelle Anpassung der Gewichtung zu initiieren und dadurch einen effektiven Datentransport durch den Tunnel 20 zu ermöglichen. Beispielsweise kann das Feedback-Paket Pf Information über die Qualität der Übertragungslinks und Kommunikationskanälen aus einer Anzahl der Paketverluste ermitteln. Das Feedback-Paket Pf enthält vorteilhaft externe Information der Übertragungslinks 41, 42, 43, auf welche die Datenübertragungseinrichtung 10 keinen Zugriff hat. Diese externe Information steht jedoch einer Datenempfangseinrichtung 60 zur Verfügung und kann diese mittels der zurückgesandten Feedback-Pakete Pf der Datenübertragungseinrichtung 10 zur Verfügung stellen. Wenn Feedback-Pakete Pf Information über alle Übertragungslinks oder je Übertragungslink enthalten, so kann ein Verlust eines Feedback-Pakets Pf besser kompensiert werden, da das nächste Feedback-Paket Pf entsprechende Information wieder zur Verfügung stellt. Wird ein Übertragungslink nicht zum Datentransport genutzt, so kann das Intervall der Feedback-Pakete Pf erhöht werden, sodass nicht unnötig Bandbreite verbraucht wird.

Die Feedback-Pakete Pf können dabei insbesondere Information über die Qualität des Kommunikationskanals 31, 32 und/oder die Qualität eines, mehrerer oder aller verfügbarer Übertragungslinks 41, 42, 43 umfassen. Auf Basis der gewonnen Information kann beispielsweise die Datenübertragungseinrichtung 10, wie zuvor beschrieben, dazu eingerichtet sein, die Zuordnung der Verbindung 51, 52, 53 von einem ersten Übertragungslink 41, 42, 43 auf einen zweiten Übertragungslink 41, 42, 43 zu ändern beziehungsweise die Gewichtung der einzelnen Übertragungslinks anzupassen. Eine Änderung der Zuordnung kann bevorzugt dann erfolgen, wenn die Gewichtung der Übertragungslinks 41, 42, 43 sich derart ändert, dass ein zweiter Übertragungslink 41, 42, 43 durch die Änderung eine höhere Gewichtung als ein erster Übertragungslink 41, 42, 43 erhält. Ein Beispiel wurde bereits weiter oben beschrieben. Wie durch Fig. 1 und Fig. 2 dargestellt, ist hierbei beispielhaft eine Gewichtungsänderung durch die Datenübertragungseinrichtung 10 erfolgt, welche genügend hoch ist, um eine Gewichtungsreihenfolge zu verändern. In einem Sonderfall kann beispielsweise ein erster Übertragungslink 41, 42, 43 nicht mehr verwendbar sein. Dann kann ein solcher nicht verwendbarer Übertragungslink 41, 42, 43 auf Gewicht null gesetzt werden.

Kann einer Verbindung 51, 52, 53 kein Übertragungslink 41, 42, 43 zugeordnet werden, so kann die Datenübertragungseinrichtung 10 derart ausgebildet sein, die Verbindung 51, 52, 53 bestehen zu lassen. Somit verlieren die Verbindungen nicht an Gültigkeit und bleiben beispielsweise bei Unterbrechung aller Kommunikationskanäle, z.B. bei standardmäßigem DSL oder mit anderen Worten einer standardmäßigen DSL-Wiedereinwahl, erhalten und können zu einem späteren Zeitpunkt fortgesetzt werden.

Mit Vorteil findet eine Änderung des Übertragungslinks 41, 42, 43 durch die Datenübertragungseinrichtung 10 erst nach einer Schwellenzeit statt. Hier wäre das beispielsweise T oder nahezu T. Beispielsweise kann die Schwellenzeit mindestens der größten Umlaufzeit des ersten oder zweiten Übertragungslinks entsprechen. Dadurch wird sichergestellt, dass trotz veränderter Zuweisung, zum Beispiel während der Übertragung, die Datenpakete einer Verbindung 51, 52, 53 in der richtigen Reihenfolge bei der Datenempfangseinrichtung 60 ankommen und entsprechend von der Datenempfangseinrichtung 60 zu dem korrekten Datenstrom zusammengefasst werden können.

Die Gewichtung der Übertragungslinks 41, 42, 43 kann dabei auf Basis verschiedener Größen oder deren Kombination erfolgen. Beispielsweise kann die Bandbreite des Kommunikationskanals 31, 32, die Übertragungslinkqualität, das bisher bereits verbrauchte Datenvolumen und/oder Datenvolumen pro Zeit je Übertragungslink 41, 42, 43 verwendet werden. Auch kann beispielsweise die Anzahl der pro Übertragungslink 41, 42, 43 zugeordneter Verbindungen 51, 52, 53 als Gewichtung genommen werden. In der Fig. 1, rein beispielhaft, wird die zweite Verbindung 52 einem zweiten Übertragungslink 42 zugeordnet, da der erste Übertragungslink 41 bereits die Datenmenge der ersten Verbindung 51 und der dritten Verbindung 53 zu transportieren hat. Entsprechend wäre hier als Gewichtung die Anzahl der Verbindungen 51, 53 und/oder auch das bereits verbrauchte Datenvolumen beispielhaft verwendet.

Ferner kann die Datenübertragungseinrichtung 10 dazu eingerichtet sein, jedem Übertragungslink 41, 42, 43 auch eine Priorität zuzuweisen, wobei Übertragungslinks 41, 42, 43 gleicher Priorität eine Prioritätsklasse bilden.

Die Datenübertragungseinrichtung 10 ordnet in einer solchen Ausführung die Verbindungen 51, 52, 53 einem Übertragungslink 41, 42, 43 gemäß der Priorität zu. Wenn mehrere Übertragungslinks 41, 42, 43 mit gleicher Priorität beziehungsweise einer Prioritätsklasse vorhanden sind, so werden die Verbindungen 51, 52, 53 gemäß der oben beschriebenen Gewichtung auf diese Übertragungslinks 41, 42, 43 verteilt. In dieser Ausführungsform wird immer nur die höchste verfügbare Prioritätsklasse zur Übertragung verwendet. Sind alle Übertragungslinks 41, 42, 43 dieser Prioritätsklasse nicht mehr nutzbar, wird die nächstniedrigere nutzbare Prioritätsklasse zur Übertragung verwendet. Sobald ein Übertragungslink 41, 42, 43 einer höheren Prioritätsklasse wieder verfügbar ist, wird dann wieder diese höhere Prioritätsklasse verwendet. Übertragungslinks 41, 42, 43 mit gleicher Priorität werden den Verbindungen 51, 52, 53 gemäß der Gewichtung zugewiesen. Die Gewichtung bezieht sich hierbei auf die aktuelle Prioritätsklasse, das heißt, dass sich zwei Übertragungslinks 41, 42, 43 unterschiedlicher Priorität nicht beeinflussen. Die Gewichtung spielt in dieser Ausführung somit nur dann eine Rolle, falls mehrere Übertragungslinks 41, 42, 43 gleicher Priorität verfügbar sind. Die Priorität kann rein beispielhaft durch eine Zahl dargestellt werden, zum Beispiel 100, 99, 98 etc., wobei die Erfindung nicht darauf beschränkt ist. Die Gewichtung hingegen gibt an, hier und im Allgemeinen, wie die einzelnen Verbindungen, beispielsweise Verbindungen von Hotspot-Nutzern, auf die Übertragungslinks verteilt werden. Beispielsweise kann eine Gewichtung durch eine Prozentzahl ausgedrückt werden, wie hoch der Anteil an Verbindungen oder Datenpaketen ist, welche über diesen Übertragungslink gesendet werden. Einem Übertragungslink 41, 42, 43 kann somit sowohl eine Gewichtung als auch eine Priorität zugewiesen werden.

Die Prioritätsklasse kann dabei auf einer Art des Kommunikationskanals und/oder auf einer Bandbreite und/oder auf einer Latenz des Übertragungslinks 41, 42, 43 basierend sein, wobei die Erfindung nicht darauf beschränkt ist. Rein beispielhaft kann eine Prioritätsklasse eine DSL-Verbindung mit 100 Mbit/s sein, eine zweite Prioritätsklasse eine DSL-Verbindung mit 50 Mbit/s und LTE-Verbindungen und eine dritte Prioritätsklasse 3 UMTS-Verbindungen umfassen, wobei dies nur ein Beispiel darstellt und die Erfindung nicht darauf beschränkt ist.

Durch die Priorisierung lassen sich sogenannte Fallback-Übertragungslinks realisieren, welche nur im Bedarfsfall verwendet werden. In einer weiteren Ausführungsform kann eine Bandbreitenlimitierung in Kombination mit der Prioritätsklasse erfolgen. Jeder Prioritätsklasse kann beispielsweise eine bestimmte Bandbreite zugewiesen werden. Beispielsweise kann die Datenübertragungseinrichtung 10 dazu eingerichtet sein, in Antwort auf das Verwenden eines Fallback-Links als Übertragungslinks oder eines Links geringerer Priorität, die Bandbreite aller Verbindungen 51, 52, 53 oder des Tunnels 20 zu steuern beziehungsweise zu limitieren. Da jede Datenübertragungseinrichtung 10 und auch jede Datenempfangseinrichtung 60 die Prioritätsklasse selbst bestimmt, können Datenpakete von Übertragungslinks unterschiedlicher Prioritätsklassen empfangen.

Die Datenübertragungseinrichtung 10 kann ferner in jedem Header der zu übertragenden Datenpakete eine ID des zugeordneten Übertragungslinks 41, 42, 43 einschreiben. Durch das Einschreiben einer eindeutigen ID kann ein Übertragungslink 41, 42, 43 eindeutig durch die Datenempfangseinrichtung 60 identifiziert werden, auch wenn sich die IP-Adresse des Übertragungslinks 41, 42, 43 bzw. des zugehörigen Kommunikationskanals 31, 32 ändert, zum Beispiel auch durch Zuweisungsänderung. Der Übertragungslink 41, 42, 43 kann somit auch bei Verbindungsabbruch weiterhin bestehen. Dadurch werden Verbindungen eines Nutzers nicht beeinträchtigt. Übertragungslinks können nach einem Wiederaufbau des Kommunikationskanals wiederverwendet werden. Dadurch wird eine Form von Link-Recovery bereitgestellt. Verbindungen einzelner Nutzer werden nicht beeinträchtigt.

Die Datenübertragungseinrichtung 10 kann auch die Bandbreite einer Verbindung 51, 52, 53 und/oder eines Übertragungslinks 41, 42, 43 limitieren. Dadurch kann eine flexible Nutzerkontrolle erfolgen. Beispielsweise kann gesteuert werden, dass nicht ein Nutzer mit seiner oder seinen Verbindungen den Datenstrom durch den Tunnel 20 einseitig belastet. Auch der Tunnel 20 selbst kann durch die Datenübertragungseinrichtung 10 in der Bandbreite gesteuert werden.

Ferner ist ein Sendeverfahren beschrieben, welches auch in den Figuren 1 und 2 enthalten ist. Das Sendeverfahren ist zum Übertragen von Datenpaketen von einer Datenübertragungseinrichtung 10 durch einen mindestens einen Kommunikationskanal umfassenden Tunnel 20 zu einer Datenempfangseinrichtung 60 ausgebildet. Das Sendeverfahren umfasst das Empfangen von einem Datenstrom in Form von Datenpaketen über mindestens eine Verbindung 51, 52, 53. Ferner umfasst das Sendeverfahren das Einkapseln der empfangenen Datenpakete und Übermitteln der eingekapselten Datenpakete mittels eines paketbasierten Übertragungsprotokolls über einen Übertragungslink 41, 42, 43 eines Kommunikationskanals 31, 32 an die Datenempfangseinrichtung 60, wobei der Kommunikationskanal 31, 32 zumindest einen Übertragungslink 41, 42, 43 umfasst. In einem weiteren Schritt umfasst das Sendeverfahren das Zuordnen der Verbindung 51, 52, 53 zu einem Übertragungslink 41, 42, 43 gemäß einer jedem Übertragungslink 41, 42, 43 zugewiesenen Gewichtung, sodass die Datenpakete der mindestens einen Verbindung 51, 52, 53 über den zugeordneten Übertragungslink 41, 42, 43 an die Datenempfangseinrichtung 60 übertragen werden. Ferner umfasst das Sendeverfahren das Erhalten von Information über den Übertragungslink 41, 42, 43 und/oder des zugehörigen Kommunikationskanals 31, 32 und das Anpassen der Gewichtung eines Übertragungslinks 41, 42, 43 auf Basis der erhaltenen Information. Weitere Verfahrensschritte beziehen sich auf die oben beschriebenen Merkmale der Datenübertragungseinrichtung 10, siehe oben.

Ferner ist eine nicht von den Ansprüchen geschützte Datenempfangseinrichtung 60 zum Empfangen von durch einen mindestens einen Kommunikationskanal umfassenden Tunnel 20 gesendeten Datenpaketen gezeigt. Diese ist ebenfalls schematisch in der Fig. 1 dargestellt. Die Datenempfangseinrichtung 60 ist dazu eingerichtet ist, die mittels eines paketbasierten Übertragungsprotokolls über einen Übertragungslink 41, 42, 43 eines Kommunikationskanals 31, 32 an die Datenempfangseinrichtung 60 gesendeten Datenpakete zu empfangen und zu entkapseln, wobei der Kommunikationskanal 31, 32 zumindest einen Übertragungslink 41, 42, 43 umfasst. Die Datenempfangseinrichtung 60 ist dabei ferner dazu eingerichtet, empfangene Datenpakete jeder Verbindung 51, 52, 53 zu einem Datenstrom zusammenzuführen. Die Datenempfangseinrichtung 60 ist ferner dazu eingerichtet, Information über den Übertragungslink 41, 42, 43 und/oder des zugehörigen Kommunikationskanals 31, 32 zu senden. Dadurch kann, wie bereits oben beschrieben, eine schnelle Anpassung der Gewichtung erfolgen. Die Datenempfangseinrichtung 60 kann dabei die übertragenen Pakete P1, P2, P3, P4, P5 entsprechend ausgangsseitigen Verbindungen 51, 52, 53 zuordnen, so dass die ursprüngliche eingangsseitigen Datenpakete P1, P2, P3 und P4, P5 der eingangsseitigen Verbindungen 51, 52, 53 korrekt durch den Tunnel 20 transportiert werden.

Die Datenempfangseinrichtung 60 kann auch mehrere verteilte Einzeldatenempfangseinrichtungen umfassen. Diese können beispielsweise auf verschiedener Hardware getrennt ausgeführt sein. Dadurch wird die Ausfallsicherheit erhöht, da der Tunnel 20 bei einem Ausfall einer Einzeldatenempfangseinrichtung weiterhin durch die übrigen Einzeldatenempfangseinrichtungen bestehen bleiben kann. Auch hier können einzelnen Übertragungslinks nur für das Senden verwendet werden, sodass zum Beispiel eine Datenempfangseinrichtung 60 lediglich für das Empfangen zuständig ist.

Zusammen bildet die Datenübertragungseinrichtung 10 und die Datenempfangseinrichtung 60 ein VPN-Netzwerk 100, welches über einen Tunnel 20 verbunden ist. Der Tunnel 20 umfasst dabei mindestens einen Kommunikationskanal 31, 32, wobei der Kommunikationskanal 31, 32 zumindest einen Übertragungslink 41, 42, 43 umfasst. Die Datenübertragung über den Tunnel 20 kann dabei asynchron erfolgen. Die Datenübertragungseinrichtung 10 kann nämlich dazu eingerichtet sein, Datenpakete über einen ersten Übertragungslink 41, 42, 43 an die Datenempfangseinrichtung 60 zu senden, die Datenempfangseinrichtung 60 wiederum dazu eingerichtet sein, Datenpakete über einen zweiten Übertragungslink 41, 42, 43 an die Datenübertragungseinrichtung 10 zu senden, wobei sich der erste und der zweite Übertragungslink voneinander unterscheiden. In dem vorliegenden Beispiel wird beispielsweise das Feedback-Paket Pf auf einem anderen Übertragungslink gesendet als die Datenpakete P1, P2, P3, P4, P5.

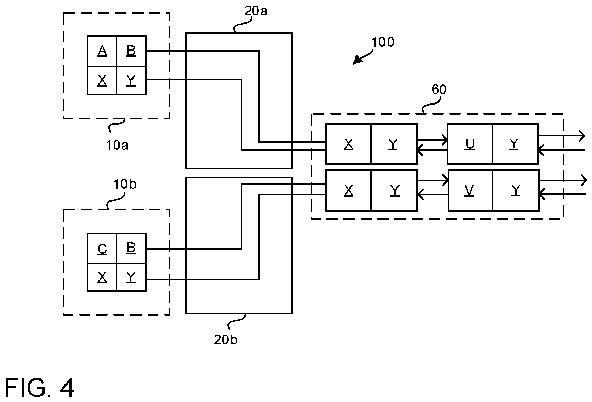

In der Fig. 4 ist ein VPN-Netzwerk 100 gemäß einer weiteren Ausführungsform der Erfindung gezeigt. Das VPN-Netzwerk 100 umfasst dabei mindestens zwei Datenübertragungseinrichtungen 10a, 10b, in diesem Fall beispielhaft zwei. Dadurch sind auch zwei Tunnel 20a, 20b ausbildet. Die Datenempfangseinrichtung 60 ist dabei bevorzugt dazu eingerichtet, die Quelladressen der eingekapselten Datenpakete von den zwei Datenübertragungseinrichtungen 10a, 10b auf eine jeweils eindeutige Quelladresse zu setzen. Hierbei werden beispielsweise von zwei Datenübertragungseinrichtungen 10a, 10b, hier als Endpunkte A und C bezeichnet, identische Quelladressen X gesendet. Die Datenempfangseinrichtung 60, hier als Endpunkt B bezeichnet, entpackt die eingebetteten Pakete und ändert die Quelladresse auf eine eindeutige Adresse U, V. Die jeweiligen Adressen X der Datenübertragungseinrichtungen 10a, 10b sind demnach durch die Adressen U beziehungsweise V zu erreichen. Für die Rückrichtung, also für Datenpakete von Datenempfangseinrichtung 60 zu einer Datenübertragungseinrichtung 10a, 10b, kann dann die eindeutige Adresse wieder auf die ursprüngliche Quelladresse gesetzt werden. Durch das Setzen auf eine eindeutige Quelladresse können die Datenpakete dem jeweiligen Tunnel zugeordnet werden, so dass auch Antwortpakete auf Anfragen der Quellen, also der Verbindungen, richtig zugeordnet werden können.

Weiterhin können die Datenübertragungseinrichtungen 10a, 10b derart eingerichtet sein, dass die Bandbreite eines ersten Tunnels 20a zwischen der ersten Datenübertragungseinrichtung 10a und der Datenempfangseinrichtung 60 gegenüber der Bandbreite eines zweiten Tunnels 20b zwischen der zweiten Datenübertragungseinrichtung 10b und der Datenempfangseinrichtung 60 steuerbar ist. Beispielsweise kann die Datenübertragungseinrichtung 10a, 10b die Bandbreite des ersten Tunnels 20a gegenüber dem zweiten Tunnel 20b limitieren. Somit können Tunnel 20a, 20b in ihrer Datenstrommenge gesteuert werden. Auch hier kann jedem Tunnel 20a, 20b eine gewisse Bandbreite zugewiesen werden und auch hier können Klassen für bestimmte Tunnel verwendet werden. Die Anzahl der Tunnel ist dabei nicht auf eine bestimmte Anzahl limitiert.

### Bezugszeichenliste

- 10, 10a, 10b: Datenübertragungseinrichtung
- 20, 20a, 20b: Tunnel
- 31,32: Kommunikationskanal
- 41,42,43: Übertragungslink
- 51, 52, 53: Verbindung
- 60: Datenempfangseinrichtung
- 100: VPN-Netzwerk
- P1, P2, P3, P4, P5: Datenpaket
- Pf: Feedback-Paket

## Patentansprüche

1. Eine Datenübertragungseinrichtung (10) zum Übertragen von Datenpaketen durch einen mindestens einen Kommunikationskanal umfassenden Tunnel (20) zu einer Datenempfangseinrichtung (60), umfassend:
- wobei die Datenübertragungseinrichtung (10) dazu eingerichtet ist, über mindestens eine Verbindung (51, 52, 53) einen Datenstrom in Form von Datenpaketen zu empfangen;
- wobei die Datenübertragungseinrichtung (10) dazu eingerichtet ist, die empfangenen Datenpakete in Übertragungspakete einzukapseln und mittels eines paketbasierten Übertragungsprotokolls über einen Übertragungslink (41, 42, 43) eines Kommunikationskanals (31, 32) an die Datenempfangseinrichtung (60) zu übermitteln, wobei der Kommunikationskanal (31, 32) zumindest einen Übertragungslink (41, 42, 43) umfasst;
**dadurch gekennzeichnet, dass**
- die Datenübertragungseinrichtung (10) dazu eingerichtet ist, die mindestens eine Verbindung (51, 52, 53) einem Übertragungslink (41, 42, 43) gemäß einer jedem Übertragungslink (41, 42, 43) zugewiesenen Gewichtung zuzuordnen, sodass die Datenpakete der mindestens einen Verbindung (51, 52, 53) eingekapselt über den jeweils zugeordneten Übertragungslink (41, 42, 43) an die Datenempfangseinrichtung (60) übertragen werden; und
- wobei die Datenübertragungseinrichtung (10) dazu eingerichtet ist, Information über den Übertragungslink (41, 42, 43) und/oder des zugehörigen Kommunikationskanals (31, 32) auf Basis von über den Tunnel (20) von der Datenempfangseinrichtung (60) gesendeten Feedback-Paketen (Pf) zu erhalten und auf Basis der erhaltenen Information die Gewichtung des Übertragungslinks (41, 42, 43) anzupassen.

2. Datenübertragungseinrichtung (10) nach Anspruch 1, wobei die Feedback-Pakete (Pf) Information über die Qualität des Kommunikationskanals (31, 32) und/oder die Qualität eines, mehrerer oder aller verfügbarer Übertragungslinks (41, 42, 43) umfassen.

3. Datenübertragungseinrichtung (10) nach einem der Ansprüche 1 bis 2, wobei die Datenübertragungseinrichtung (10) dazu eingerichtet ist, die Zuordnung der Verbindung (51, 52, 53) von einem ersten Übertragungslink (41, 42, 43) auf einen zweiten Übertragungslink (41, 42, 43) zu ändern, wenn die Gewichtung der Übertragungslinks (41, 42, 43) sich derart ändert, dass der zweite Übertragungslink (41, 42, 43) eine durch die Änderung höhere Gewichtung als der erste Übertragungslink (41, 42, 43) aufweist oder wenn der erste Übertragungslink (41, 42, 43) nicht mehr verwendbar ist.

4. Datenübertragungseinrichtung (10) nach Anspruch 3, wobei die Datenübertragungseinrichtung (10) dazu eingerichtet ist, die Änderung des Übertragungslinks (41, 42, 43) nach einer Schwellenzeit zu vollziehen, wobei die Schwellenzeit mindestens der größten Umlaufzeit des ersten oder zweiten Übertragungslink (41, 42, 43) entspricht.

5. Datenübertragungseinrichtung (10) nach einem der vorherigen Ansprüche 1 bis 4, wobei die Gewichtung auf Basis der Größen Bandbreite des Kommunikationskanals (31, 32), Übertragungslinkqualität, bisher bereits verbrauchtes Datenvolumen und/oder Datenvolumen pro Zeit je Übertragungslink (41, 42, 43) und/oder der Anzahl der pro Übertragungslink (41, 42, 43) zugeordneter Verbindungen (51, 52, 53) erfolgt.

6. Datenübertragungseinrichtung (10) nach einem der vorherigen Ansprüche 1 bis 5, wobei die Datenübertragungseinrichtung (10) dazu eingerichtet ist, jedem Übertragungslink (41, 42, 43) eine Priorität zuzuweisen, wobei Übertragungslinks (41, 42, 43) gleicher Priorität eine Prioritätsklasse bilden, und wobei die Datenübertragungseinrichtung (10) dazu eingerichtet ist, eine Verbindung (51, 52, 53) einem Übertragungslink (41, 42, 43) gemäß der Priorität des Übertragungslinks (41, 42, 43) zuzuweisen, und wobei die Zuweisung bei mehreren Übertragungslinks (41, 42, 43) einer Prioritätsklasse gemäß deren Gewichtung erfolgt.

7. Datenübertragungseinrichtung (10) nach einem der vorherigen Ansprüche 1 bis 6, wobei die Datenübertragungseinrichtung (10) dazu eingerichtet ist, in jedem Header der zu übertragenden Datenpakete eine ID des zugeordneten Übertragungslink (41, 42, 43) einzuschreiben, und/oder wobei die Datenübertragungseinrichtung (10) dazu eingerichtet ist, die Bandbreite einer Verbindung (51, 52, 53) und/oder eines Übertragungslinks (41, 42, 43) und/oder eines Tunnels (20) zu steuern.

8. VPN-Netzwerk (100), umfassend eine Datenübertragungseinrichtung (10) nach einem der vorherigen Ansprüche 1 bis 7, welche mit einer Datenempfangseinrichtung (60) durch einen mindestens einen Kommunikationskanal (31, 32) umfassenden Tunnel (20) verbunden ist, wobei der Kommunikationskanal (31, 32) zumindest einen Übertragungslink (41, 42, 43) umfasst, und wobei die Datenempfangseinrichtung (60) dazu eingerichtet ist:
die über einen Übertragungslink (41, 42, 43) eines Kommunikationskanals (31, 32) mittels eines paketbasierten Übertragungsprotokolls an die Datenempfangseinrichtung (60) gesendeten Datenpakete zu empfangen und zu entkapseln,
die empfangenen Datenpakete jeder Verbindung (51, 52, 53) zu einem Datenstrom zusammenzuführen; und
Information über einen Übertragungslink (41, 42, 43) und/oder eines zugehörigen Kommunikationskanals (31, 32) durch Feedback-Pakete (Pf) an die Datenübertragungseinrichtung (10) zu senden.

9. VPN-Netzwerk (100) nach Anspruch 8, wobei die Datenübertragungseinrichtung (10) dazu eingerichtet ist, Datenpakete über einen ersten Übertragungslink (41, 42, 43) an die Datenempfangseinrichtung (60) zu senden, die Datenempfangseinrichtung (60) dazu eingerichtet ist, Datenpakete über einen zweiten Übertragungslink (41, 42, 43) an die Datenübertragungseinrichtung (10) zu senden, wobei sich der erste und der zweite Übertragungslink sich voneinander unterscheidet.

10. VPN-Netzwerk (100) nach einem der Ansprüche 8 bis 9, wobei das VPN-Netzwerk (100) mindestens zwei Datenübertragungseinrichtungen (10a, 10b) umfasst, wobei die Datenempfangseinrichtung (60) dazu eingerichtet ist, die Quelladressen der eingekapselten Datenpakete von den zwei Datenübertragungseinrichtungen (10a, 10b) auf eine jeweils eindeutige Quelladresse zu setzen, wobei jede der Verbindungen (51, 52, 53) der Datenübertragungseinrichtung (10a, 10b) auf der Datenempfangseinrichtung (60) eindeutig über die zugewiesene Quelladresse identifizierbar ist.

11. VPN-Netzwerk (100) nach Anspruch 10, wobei die erste und die zweite Datenübertragungseinrichtung (10a, 10b) derart eingerichtet sind, dass die Bandbreite eines ersten Tunnels (20a) zwischen der ersten Datenübertragungseinrichtung (10a) und der Datenempfangseinrichtung (60) gegenüber der Bandbreite eines zweiten Tunnels (20b) zwischen der zweiten Datenübertragungseinrichtung (10b) und der Datenempfangseinrichtung (60) limitiert ist.

12. Sendeverfahren zum Übertragen von Datenpaketen von einer Datenübertragungseinrichtung (10) durch einen mindestens einen Kommunikationskanal umfassenden Tunnel (20) zu einer Datenempfangseinrichtung (60), umfassend:
- Empfangen von einem Datenstrom in Form von Datenpaketen über mindestens eine Verbindung (51, 52, 53);
- Einkapseln der empfangenen Datenpakete und Übermitteln der eingekapselten Datenpakete mittels eines paketbasierten Übertragungsprotokolls über einen Übertragungslink (41, 42, 43) eines Kommunikationskanals (31, 32) an die Datenempfangseinrichtung (60), wobei der Kommunikationskanal zumindest einen Übertragungslink (41, 42, 43) umfasst;
**gekennzeichnet durch**,
- Zuordnen der Verbindung (51, 52, 53) zu einem Übertragungslink (41, 42, 43) gemäß einer jedem Übertragungslink (41, 42, 43) zugewiesenen Gewichtung, sodass die Datenpakete der mindestens einen Verbindung (51, 52, 53) über den zugeordneten Übertragungslink (41, 42, 43) an die Datenempfangseinrichtung (60) übertragen werden; und
- Erhalten von Information über den Übertragungslink (41, 42, 43) und/oder des zugehörigen Kommunikationskanals (31, 32) auf Basis von über den Tunnel (20) von der Datenempfangseinrichtung (60) gesendeten Feedback-Paketen (Pf) und Anpassen der Gewichtung des Übertragungslinks (41, 42, 43) auf Basis der erhaltenen Information.

13. Computerprogrammprodukt, umfassend Befehle, die bei der Ausführung des Programms durch einen Computer diesen veranlassen, die Schritte nach Anspruch 12 auszuführen.

## Claims

1. Data transmission device (10) for transmitting data packets through a tunnel (20) comprising at least one communication channel to a data reception device (60), comprising:
- wherein the data transmission device (10) is arranged to receive a data stream in the form of data packets via at least one connection (51, 52, 53);
- wherein the data transmission device (10) is arranged to encapsulate the received data packets into transmission packets and to transmit them to the data reception device (60) by means of a packet-based transmission protocol via a transmission link (41, 42, 43) of a communication channel (31, 32), wherein the communication channel (31, 32) comprises at least one transmission link (41, 42, 43);
**characterised in that**
- the data transmission device (10) is arranged to assign the at least one connection (51, 52, 53) to a transmission link (41, 42, 43) in accordance with a weighting assigned to each transmission link (41, 42, 43), so that the data packets of the at least one connection (51, 52, 53) are transmitted encapsulated via the respectively assigned transmission link (41, 42, 43) to the data reception device (60); and
- wherein the data transmission device (10) is arranged to obtain information about the transmission link (41, 42, 43) and/or the associated communication channel (31, 32) on the basis of feedback packets (Pf) transmitted via the tunnel (20) from the data reception device (60) and to adjust the weighting of the transmission link (41, 42, 43) on the basis of the obtained information.

2. Data transmission device (10) according to claim 1, wherein the feedback packets (Pf) comprise information about the quality of the communication channel (31, 32) and/or the quality of one, more or all available transmission links (41, 42, 43).

3. Data transmission device (10) according to any one of claims 1 to 2, wherein the data transmission device (10) is arranged to change the assignment of the link (51, 52, 53) from a first transmission link (41, 42, 43) to a second transmission link (41, 42, 43), when the weighting of the transmission links (41, 42, 43) changes such that the second transmission link (41, 42, 43) has a higher weighting than the first transmission link (41, 42, 43) due to the change, or when the first transmission link (41, 42, 43) is no longer usable.

4. Data transmission device (10) according to claim 3, wherein the data transmission device (10) is arranged to effect the change of the transmission link (41, 42, 43) after a threshold time, wherein the threshold time corresponds at least to the largest round trip time of the first or second transmission link (41, 42, 43).

5. Data transmission device (10) according to any one of the preceding claims 1 to 4, wherein the weighting is carried out on the basis of the variables bandwidth of the communication channel (31, 32), transmission link quality, data volume already consumed to date and/or data volume per time per transmission link (41, 42, 43) and/or the number of connections (51, 52, 53) assigned per transmission link (41, 42, 43).

6. Data transmission device (10) according to any one of the preceding claims 1 to 5, wherein the data transmission device (10) is arranged to assign a priority to each transmission link (41, 42, 43), wherein transmission links (41, 42, 43) of equal priority form a priority class, and wherein the data transmission device (10) is arranged to assign a connection (51, 52, 53) to a transmission link (41, 42, 43) according to the priority of the transmission link (41, 42, 43), and wherein, in the case of several transmission links (41, 42, 43) of a priority class, the assignment is made according to their weighting.

7. Data transmission device (10) according to any one of the preceding claims 1 to 6, wherein the data transmission device (10) is arranged to write an ID of the assigned transmission link (41, 42, 43) into each header of the data packets to be transmitted, and/or wherein the data transmission device (10) is arranged to control the bandwidth of a connection (51, 52, 53) and/or a transmission link (41, 42, 43) and/or a tunnel (20).

8. VPN network (100) comprising a data transmission device (10) according to any one of the preceding claims 1 to 7, which is connected to a data reception device (60) through a tunnel (20) comprising at least one communication channel (31, 32), wherein the communication channel (31, 32) comprises at least one transmission link (41, 42, 43), and wherein the data reception device (60) is arranged to:
receive and decapsulate the data packets transmitted to the data receiving device (60) via a transmission link (41, 42, 43) of a communication channel (31, 32) by means of a packet-based transmission protocol,
combine the received data packets of each connection (51, 52, 53) into one data stream; and
transmit information about a transmission link (41, 42, 43) and/or an associated communication channel (31, 32) by feedback packets (Pf) to the data transmission device (10).

9. VPN network (100) according to claim 8, wherein the data transmitting device (10) is arranged to transmit data packets to the data receiving device (60) via a first transmission link (41, 42, 43), the data receiving device (60) is arranged to transmit data packets to the data transmitting device (10) via a second transmission link (41, 42, 43), wherein the first and the second transmission links differ from each other.

10. VPN network (100) according to any one of claims 8 to 9, wherein the VPN network (100) comprises at least two data transmission devices (10a, 10b), wherein the data reception device (60) is arranged to set the source addresses of the encapsulated data packets from the two data transmission devices (10a, 10b) to a respective unique source address, wherein each of the connections (51, 52, 53) of the data transmission device (10a, 10b) is uniquely identifiable on the data reception device (60) via the assigned source address.

11. VPN network (100) according to claim 10, wherein the first and second data transmission device (10a, 10b) are arranged such that the bandwidth of a first tunnel (20a) between the first data transmission device (10a) and the data reception device (60) is limited with respect to the bandwidth of a second tunnel (20b) between the second data transmission device (10b) and the data reception device (60).

12. Transmitting method for transmitting data packets from a data transmission device (10) through a tunnel (20) comprising at least one communication channel to a data reception device (60), comprising:
- receiving a data stream in the form of data packets via at least one connection (51, 52, 53);
- encapsulating the received data packets and transmitting the encapsulated data packets by means of a packet-based transmission protocol via a transmission link (41, 42, 43) of a communication channel (31, 32) to the data receiving device (60), wherein the communication channel comprises at least one transmission link (41, 42, 43);
**characterised by**,
- assigning the connection (51, 52, 53) to a transmission link (41, 42, 43) according to a weighting assigned to each transmission link (41, 42, 43) so that the data packets of the at least one connection (51, 52, 53) are transmitted to the data receiving device (60) via the assigned transmission link (41, 42, 43); and
- obtaining information about the transmission link (41, 42, 43) and/or the associated communication channel (31, 32) based on feedback packets (Pf) transmitted via the tunnel (20) from the data receiving device (60) and adjusting the weighting of the transmission link (41, 42, 43) based on the obtained information.

13. Computer program product comprising instructions which, when the program is executed by a computer, cause the computer to perform the steps of claim 12.

## Revendications

1. Dispositif de transmission de données (10) pour transmettre des paquets de données via un tunnel (20) comprenant au moins un canal de communication vers un dispositif de réception de données (60), comprenant :
- dans lequel le dispositif de transmission de données (10) est conçu pour recevoir un flux de données sous la forme de paquets de données par l'intermédiaire d'au moins une connexion (51, 52, 53) ;
- dans lequel le dispositif de transmission de données (10) est adapté pour encapsuler les paquets de données reçus dans des paquets de transmission et pour les transmettre au dispositif de réception de données (60) au moyen d'un protocole de transmission basé sur des paquets via une liaison de transmission (41, 42, 43) d'un canal de communication (31, 32), le canal de communication (31, 32) comprenant au moins une liaison de transmission (41, 42, 43) ;
**caractérisé en ce que**
- le dispositif de transmission de données (10) est adapté pour associer l'au moins une connexion (51, 52, 53) à une liaison de transmission (41, 42, 43) selon une pondération attribuée à chaque liaison de transmission (41, 42, 43), de sorte que les paquets de données de l'au moins une liaison (51, 52, 53) sont transmis au dispositif de réception de données (60) en étant encapsulés par l'intermédiaire de la liaison de transmission (41, 42, 43) respectivement associée ; et
- dans lequel le dispositif de transmission de données (10) est adapté pour obtenir des informations sur la liaison de transmission (41, 42, 43) et/ou le canal de communication associé (31, 32) sur la base de paquets de rétroaction (Pf) transmis par le dispositif de réception de données (60) via le tunnel (20) et pour ajuster la pondération de la liaison de transmission (41, 42, 43) sur la base des informations obtenues.

2. Dispositif de transmission de données (10) selon la revendication 1, dans lequel les paquets de rétroaction (Pf) comprennent des informations sur la qualité du canal de communication (31, 32) et/ou la qualité d'une, de plusieurs ou de toutes les liaisons de transmission disponibles (41, 42, 43).

3. Dispositif de transmission de données (10) selon l'une des revendications 1 à 2, dans lequel le dispositif de transmission de données (10) est adapté pour changer l'attribution de la liaison (51, 52, 53) d'une première liaison de transmission (41, 42, 43) à une deuxième liaison de transmission (41, 42, 43), lorsque la pondération des liaisons de transmission (41, 42, 43) change de telle sorte que la deuxième liaison de transmission (41, 42, 43) présente une pondération supérieure à celle de la première liaison de transmission (41, 42, 43) du fait du changement ou lorsque la première liaison de transmission (41, 42, 43) n'est plus utilisable.

4. Dispositif de transmission de données (10) selon la revendication 3, dans lequel le dispositif de transmission de données (10) est adapté pour effectuer le changement de la liaison de transmission (41, 42, 43) après un temps de seuil, le temps de seuil correspondant au moins au temps de rotation le plus grand de la première ou de la deuxième liaison de transmission (41, 42, 43).

5. Dispositif de transmission de données (10) selon l'une des revendications précédentes 1 à 4, dans lequel la pondération est effectuée sur la base des grandeurs largeur de bande du canal de communication (31, 32), qualité de la liaison de transmission, volume de données déjà consommé jusqu'à présent et/ou volume de données par temps par liaison de transmission (41, 42, 43) et/ou le nombre de connexions (51, 52, 53) attribuées par liaison de transmission (41, 42, 43).

6. Dispositif de transmission de données (10) selon l'une quelconque des revendications précédentes 1 à 5, dans lequel le dispositif de transmission de données (10) est adapté pour attribuer une priorité à chaque liaison de transmission (41, 42, 43), les liaisons de transmission (41, 42, 43) de même priorité formant une classe de priorité, et dans lequel le dispositif de transmission de données (10) est adapté pour attribuer une connexion (51, 52, 53) à une liaison de transmission (41, 42, 43) en fonction de la priorité de la liaison de transmission (41, 42, 43), et dans lequel, dans le cas de plusieurs liaisons de transmission (41, 42, 43) d'une classe de priorité, l'attribution s'effectue selon leur pondération.

7. Dispositif de transmission de données (10) selon l'une des revendications précédentes 1 à 6, dans lequel le dispositif de transmission de données (10) est adapté pour inscrire dans chaque en-tête des paquets de données à transmettre un ID de la liaison de transmission (41, 42, 43) associée, et/ou dans lequel le dispositif de transmission de données (10) est adapté pour commander la largeur de bande d'une connexion (51, 52, 53) et/ou d'une liaison de transmission (41, 42, 43) et/ou d'un tunnel (20).

8. Réseau VPN (100), comprenant un dispositif de transmission de données (10) selon l'une quelconque des revendications précédentes 1 à 7, qui est connecté à un dispositif de réception de données (60) via un tunnel (20) comprenant au moins un canal de communication (31, 32), dans lequel le canal de communication (31, 32) comprend au moins une liaison de transmission (41, 42, 43), et dans lequel le dispositif de réception de données (60) est adapté à ce qui suit :
recevoir et décapsuler les paquets de données transmis au dispositif de réception de données (60) via une liaison de transmission (41, 42, 43) d'un canal de communication (31, 32) au moyen d'un protocole de transmission basé sur des paquets,
combiner les paquets de données reçus de chaque connexion (51, 52, 53) en un flux de données ; et
transmettre des informations sur une liaison de transmission (41, 42, 43) et/ou un canal de communication associé (31, 32) par des paquets de rétroaction (Pf) au dispositif de transmission de données (10).

9. Réseau VPN (100) selon la revendication 8, dans lequel le dispositif de transmission de données (10) est adapté pour transmettre des paquets de données au dispositif de réception de données (60) par l'intermédiaire d'une première liaison de transmission (41, 42, 43), le dispositif de réception de données (60) étant adapté pour transmettre des paquets de données au dispositif de transmission de données (10) par l'intermédiaire d'une deuxième liaison de transmission (41, 42, 43), la première et la deuxième liaison de transmission étant différentes l'une de l'autre.

10. Réseau VPN (100) selon l'une des revendications 8 à 9, dans lequel le réseau VPN (100) comprend au moins deux dispositifs de transmission de données (10a, 10b), le dispositif de réception de données (60) étant adapté pour transmettre les adresses sources des paquets de données encapsulés provenant des deux dispositifs de transmission de données (10a, 10b) à une adresse source respectivement univoque, chacune des connexions (51, 52, 53) du dispositif de transmission de données (10a, 10b) étant identifiable de manière univoque sur le dispositif de réception de données (60) par l'adresse source attribuée.

11. Réseau VPN (100) selon la revendication 10, dans lequel les premier et deuxième dispositifs de transmission de données (10a, 10b) sont adaptés de telle sorte que la largeur de bande d'un premier tunnel (20a) entre le premier dispositif de transmission de données (10a) et le dispositif de réception de données (60) est limitée par rapport à la largeur de bande d'un deuxième tunnel (20b) entre le deuxième dispositif de transmission de données (10b) et le dispositif de réception de données (60).

12. Procédé de transmission destiné à transmettre des paquets de données depuis un dispositif de transmission de données (10) à un dispositif de réception de données (60) via un tunnel (20) comprenant au moins un canal de communication, comprenant :
- recevoir un flux de données sous forme de paquets de données via au moins une connexion (51, 52, 53) ;
- encapsuler les paquets de données reçus et transmettre les paquets de données encapsulés au moyen d'un protocole de transmission basé sur des paquets par l'intermédiaire d'une liaison de transmission (41, 42, 43) d'un canal de communication (31, 32) au dispositif de réception de données (60), le canal de communication comprenant au moins une liaison de transmission (41, 42, 43) ;
**caractérisé par** ,
- l'association de la connexion (51, 52, 53) à une liaison de transmission (41, 42, 43) selon une pondération attribuée à chaque liaison de transmission (41, 42, 43), de sorte que les paquets de données de l'au moins une connexion (51, 52, 53) sont transmis au dispositif de réception de données (60) via la liaison de transmission associée (41, 42, 43) ; et
- l'obtention d'informations sur la liaison de transmission (41, 42, 43) et/ou le canal de communication associé (31, 32) sur la base de paquets de rétroaction (Pf) transmis via le tunnel (20) par le dispositif de réception de données (60) et l'ajustement de la pondération de la liaison de transmission (41, 42, 43) sur la base des informations obtenues.

13. Produit de programme d'ordinateur comprenant des instructions qui, lorsque le programme est exécuté par un ordinateur, amènent ce dernier à exécuter les étapes selon la revendication 12.
